**Europäisches Patentamt**

**European Patent Office**

**Office européen des brevets**

(19)

(11) Veröffentlichungsnummer: **0 103 065**
**A2**

## EUROPÄISCHE PATENTANMELDUNG

(12)

(21) Anmeldenummer: **83104518.2**

(22) Anmeldetag: **07.05.83**

(51) Int. Cl.³: **C 10 B 53/02**, **F 02 B 43/08**, **B 01 J 8/38**, **B 01 J 8/44**

(30) Priorität: **14.08.82 DE 3230338**

(43) Veröffentlichungstag der Anmeldung: **21.03.84**
**Patentblatt 84/12**

(84) Benannte Vertragsstaaten: **AT BE CH FR GB IT LI LU NL SE**

(71) Anmelder: **Fritz Werner Industrie-Ausrüstungen GmbH, Industriestrasse Postfach 1254/1255, D-6222 Geisenheim (DE)**

(72) Erfinder: **Garkisch, Adolf, Taubenberg 30, D-6270 Idstein (DE)**
Erfinder: **Weisz, Josef, Wörthstrasse 16, D-6228 Eltville (am Rhein) (DE)**
Erfinder: **Hohn, Wolfgang, Biebricher Allee 161 b, D-6200 Wiesbaden (DE)**

(74) Vertreter: **Riedel, Erich O., Dipl.-Ing., Parkstrasse 12 a, D-5657 Haan/Rhld. 2 (Gruiten) (DE)**

(54) **Verfahren und Einrichtung zum Erzeugen eines hochwertigen Motorgases.**

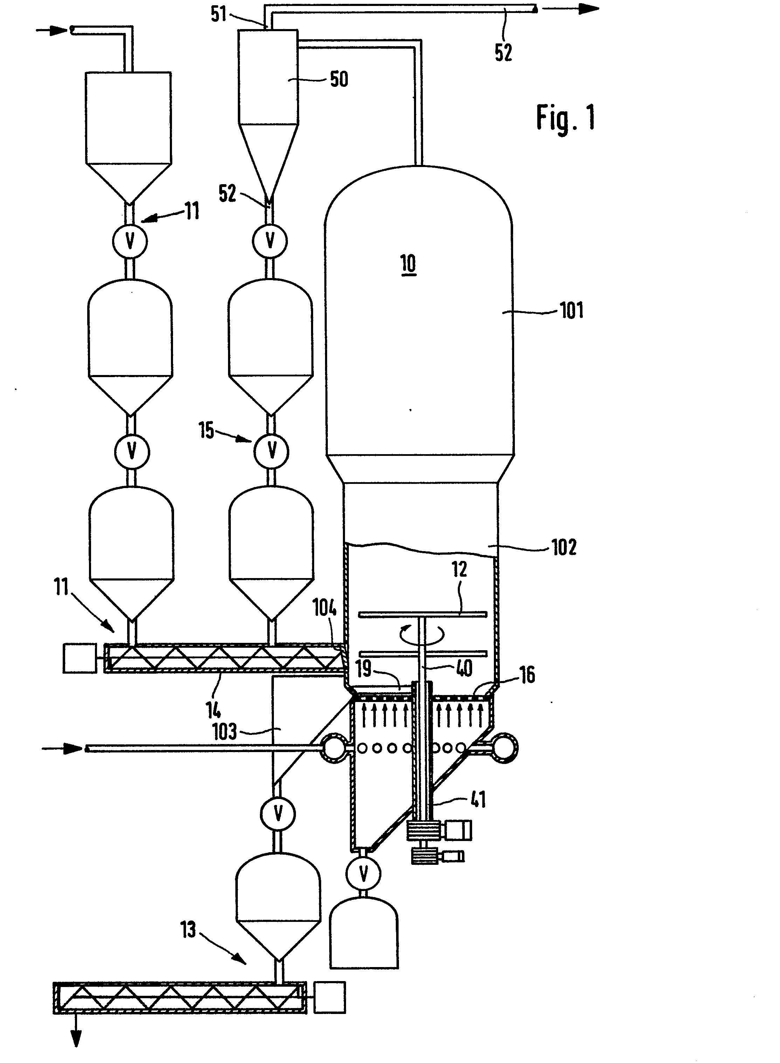

(57) Die Erfindung besteht aus einem Verfahren und einer Einrichtung, bei denen der Verbrennungsstoff gem. Fig. 1 über einen Anströmboden (16) rotierend beweg wird. Zu diesem Zweck dient das Rührwerk (12). Der Anströmboden (16) weist nach oben abgedeckte, radial mit ihrer großen Achse nach außen gerichtete Schlitze (Düsenöffnungen 17) auf. Im Bereich des Anströmbodens (16) ist ein Austragschacht (103) angeordnet, der von dem Räumschwert (19) bedient wird. Der Auslaß des Produktgases erfolgt über eine Zyklonguppe (50), deren Oberlauf das Gas und deren Unterlauf das feste Zyklongut über die Eintragschnecke (14) dem Reaktor wieder zuführt. Die Zufuhr des Aufbereitungsrohgutes und das Abführen der Aufbereitungserzeugnisse wird von der Temperatur des Wirbelbettes mengenmäßig gesteuert.

Fig. 1

## Verfahren und Einrichtung zum Erzeugen eines hochwertigen Motorgases.

Die Erfindung betrifft ein Verfahren und eine Einrichtung zum Erzeugen eines hochwertigen von kondensierbaren Bestandteilen weitestgehend freien Motorgases aus zerkleinerter und vorgetrockneter Biomasse, gegebenenfalls aus mineralischer Masse (Kohle, Braunkohle, Torf) mittels Aufbereiten (Aufheizen durch gasförmige Wärmeträger) in einem gegenüber der Athmosphäre abgedichteten System durch Aufcracken des aus einer Wirbelschicht gewonnenen Gases.

Derartige Anlagen zum Erzeugen von hochwertigen Schwachgasen sind wegen der prekären Lage durch die abnehmenden Resourcen flüssiger Brennstoffe volkswirtschaftlich wesentlich.

Der Stand der Technik weist eine Unzahl von Lösungsvorhaben auf, die sich auf dem Markt nicht durchsetzen konnten, weil sie kein Qualitätsgas, das von kondensierbaren Bestandteilen weitestgehend befreit ist, als Endprodukt liefern konnten. Das Kondensat macht deshalb im Motorbetrieb besondere Schwierigkeiten, weil die Reinigung von den körperlich faßbaren Bestandteilen bisher als nicht lösbar galt und, wenn lösbar, unzumutbar hohe Kosten entstanden. Bei der Betrachtung dieses Problems ist man bisher davon ausgegangen, daß Massen im Sinne dieser Anmeldung nicht in der Lage sind, ein Schwachgas zu liefern, dessen Verwertbarkeit im Motorbereich nicht nur bestimmten technischen, vielmehr auch wirtschaftlichen Gesetzen unterliegt.

So hat man versucht, insbesondere in Not- und Kriegszeiten, auf dem Wege des Pyrolyseverfahrens Schwachgas herzustellen. Die angebotenen Lösungen waren nur in Kriegszeiten tragbar, weil die Beschwerlichkeiten der Bedienung in friedlicheren Zeiten nicht tragbar und die relative Giftigkeit der Kondensate in friedlichen Zeiten nicht zulässig sind. In diesen Bereich der Nachteile gehört auch die penetrante Geruchsbelästigung, die einen wirtschaftlichen Einsatz der Pyrolyse ausschließen, weil die Geruchsneutralisierung zuviel kostet.

Generell ist es so, daß bei jeder aufsteigenden Vergasung in bestimmter Höhenlage sich eine Schwelzone bildet, die den Pyrolysevorgang einschließt.

Die Entwicklung in dieser Zone geht aus verfahrenstechnischen und wirtschaftlichen Gründen von einer Wirbelschicht aus, weil hier die Wärmeübertragung besonders günstig ist. Die günstige Wärmeübertragung wird durch die Bewegung und innige Mischung des Rostgutes bewirkt. Das Wirbelschichtverfahren hat sich insbesondere in großen Anlagen bewährt, weil durch Zusatz von Kalk, insbesondere bei fossilem Aufbereitungsgut, erreicht werden kann, daß der als schädlich erkannte Schwefelanteil zu $CaSO_4$ gewandelt und mit der Asche in fester Form ausgetragen werden kann, die bei weitem günstigste Form der Absonderung dieser problematischen Verbindung.

Die Erfindung hat sich die Aufgabe gestellt, die beschriebenen Nachteile der geschilderten Verfahren zu vermeiden und in dem erfindungsgemäßen Verfahren sowie der erfindungsgemäßen Einrichtung es zu ermöglichen, ein hochwertiges, von kondensierbaren Bestandteilen freies Motorgas zu erzeugen. Die Erfindung löst diese Aufgabe, indem sie von dem Verfahren nach dem Oberbegriff des Anspruches 1 ausgeht und sie kennzeichnet sich dadurch, daß über einem Anströmboden die aufzubereitende Masse rotiert und gleichzeitig schwach pulsiert, wobei die Bewegungsarten derart gesteuert werden, daß das Haufwerk weitestgehend frei von schornsteinartig wirkenden pneumatischen Durchblaskanälen ist, wobei ein etagenförmiges, die Haufwerkhöhe ganz oder überwiegend durchdringendes Rührwerk, gleichmäßig und nahezu gleichförmig durchsetzt und die Zufuhr des Aufbereitungsgutes sowie Abfuhr der Aufbereitungserzeugnisse von der Temperatur des Wirbelbettes mengenmäßig gesteuert ist.

Die Einrichtung zur Durchführung des Verfahrens kennzeichnet sich durch einen Verfahrensstammbaum mit einem Reaktor als Kernapparatur, dem ein gegenüber der Außenatmosphäre abgeschlossener Eintrag für vorgetrocknetes und zerkleinertes Aufbereitungsgut mit teilweisem Rücklauf vorgeschaltet ist, den Reaktor selbst, der ein Rührwerk oberhalb des Anströmbodens aufweist, wobei der Einrichtung ein gegenüber der Außenatmosphäre abgeschlossener Austrag nachgeschaltet ist.

Die Leistungen des erfindungsgemäßen Verfahrens und der zu diesem Verfahren gehörenden Einrichtungen zeigen die nachfolgenden technischen Daten.

Eingesetzt wurde das schwierige Aufbereitungsgut der Baumrinde. Dieses Material ist deshalb so schwierig, weil seiner Trocknung aus Gründen der zellularen Zusammensetzung enge Grenzen gesetzt sind. Weiterhin ist bekannt, daß selbst vorgetrocknetes und gut abgelagertes Rindenmaterial sehr staubhaltig ist. Diese Staubbestandteile (Definition Herr Prof. Meldau) machen aufbereitungstechnisch und vergasungstechnisch ganz erhebliche Schwierigkeiten, denn ein Motorgas muß staubfrei sein, schwefelarm (das ist besonders wichtig bei mineralischem Aufbereitungsgut) und muß kohlenmonoxid- sowie stickoxidfrei sein. Hinzu kommen die motorseitig und motorabgasseitig zu stellenden Bedingungen, die in dem einen Fall der Zündfreudigkeit wegen,der Notwendigkeit schnell ablaufender Zündvorgänge, und im anderen Falle auf die Erfüllung der vorhandenen Vorschriften Rücksicht nehmen müssen.

Das beispielhaft verwendete Material hatte folgende Daten:

| Wasserstoff | H | 18,0 % |
|---|---|---|
| Kohlenmonoxid | CO | 16,0 % |
| Methan | $CH_4$ | 2,7 % |
| Kohlendioxid | $CO_2$ | 16,0 % |
| Stickstoff | $N_2$ | 47,0 % |
| Sauerstoff | $O_2$ | nicht nachweisbar |
| Helium | He | nicht nachweisbar |
| Argon | Ar | 0,5 % |

Dies entspricht einem unteren Heizwert von:

$$H_u \quad = \quad 1178 \text{ kcal.}$$

Mit diesen nicht sehr günstigen Voraussetzungen wurde bei einer Anlage mit einer Rostgröße von nur 0,5 $m^2$ bei dem Erreichen eines qualitativ hochwertigen Schwachgases eine Mengenleistung von 600 $Nm^3/h$ erreicht.

Damit ist nicht nur die Forderung großer Leistung auf kleinstem Raum erfüllt. Mittels der Erfindung ist es nunmehr auch möglich, den bisher nicht abdeckbaren Bereich dezentraler Kleinanlagen technisch einwandfrei zu beherrschen.

Die Figuren stellen ein Ausführungsbeispiel der Erfindung dar. Es zeigen:

Figur 1    einen schematischen Schnitt durch die Apparaturen und ihre konstruktiven Besonderheiten,

Figur 2    den erweiterten Verfahrensstammbaum unter Verwendung der in Figur 1 dargestellten Teile,

Figur 3    das Detail des Etagenrostes und des Anströmbodens mit ihren Antrieben,

Figur 4    eine Draufsicht auf den Anströmboden mit Austragschwert und

Figur 5    einen Schnitt durch den Anströmboden.

0103065

Wie aus der Figur 1 ersichtlich, weist die Kernapparatur 10 ein besonderes Merkmal der Erfindung auf. Der obere Teil 101 ist vergleichsweise zum unteren Teil 102 erweitert. Diese Querschnittserweiterung findet ihre Begründung in dem Umstand, daß durch die Raumvergrößerung die Geschwindigkeit der Schwebeteilchen herabgesetzt wird. Im unteren Teil 102 des Reaktors 10 ist als weiteres äußerliches Merkmal der Erfindung ein Etagen-Rührwerk 12 angeordnet. Dieses Etagen-Rührwerk hat die Aufgabe, der Wirbelschicht eine erfindungstypische Rotationsbewegung zu vermitteln. Diese Rotation wird durch die pneumatische Wirkung, die gleichsinnig verläuft, verstärkt. Es hat sich bei dieser Bewegungsart zusammen mit dem eigenartig gestalteten Anströmboden 16 herausgestellt, daß das auf diese Weise in Bewegung versetzte Haufenwerk sich pneumatisch eigenartig verhält. Das zugeführte Gas weist eine nicht kontinuierliche Pression- und Depressionswirkung auf, so daß sich eine schwach pulsierende Haufwerksmischung einstellt, bei der der Energieaustausch der Haufwerksteilchen untereinander besonders intensiv ist und sich verfahrenstechnisch Wirkungen einstellen, die dem Verhalten einer Schwereflüssigkeit nahe kommen. Das führt zu einer nahezu idealen Erfüllung der Forderung von großer Leistung auf kleinstem Raum.

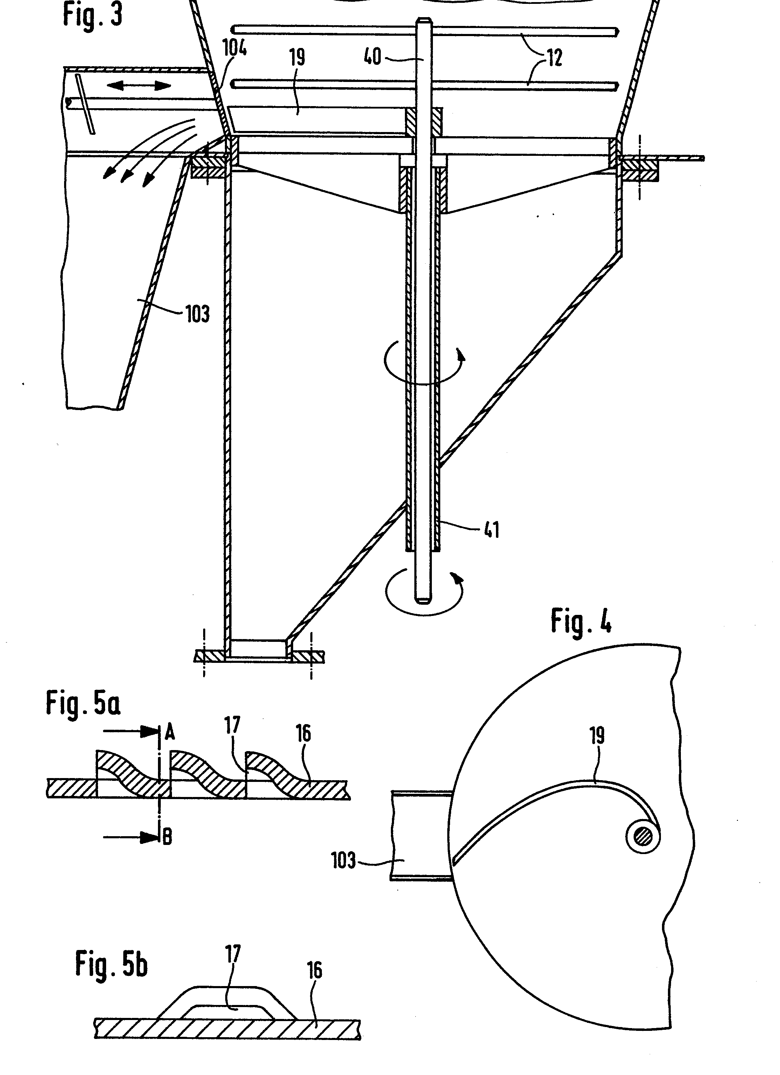

Der Anströmboden 16 weist eine erfindungswesentliche Gestaltung auf. Seine Öffnungen münden zwar im Betriebssinne in das Aufbereitungsgut, sind aber gegen das Haufwerk abgedeckt. Figur 5 zeigt, daß die Wirkung dieser Öffnungen den radial gerichteten Rotationstransport des Aufbereitungsgutes über dem Anströmboden 16 erheblich fördert.

Die Öffnungen 17 liegen mit ihrer größeren Achse in Richtung der Radialen des Anströmbodens 16. Das Rührwerk 12, vorzugsweise als Etagen-Rührwerk ausgebildet, wird über die Welle 40 vom Antrieb her kommend rotierend in Bewegung gesetzt und auch der Anströmboden erhält über eine Hohlwelle 41 einen gleichsinnigen Antrieb. Dieser Antrieb durch die Hohlwelle 41 wird aber erst eingeschaltet, wenn ein Austragsvorgang eingeleitet und durchgeführt werden soll. Dann läuft das Haufwerk gegen das feststehende Räumschwert 19, wie in Figur 4 gezeigt und gelangt in den Austragschacht 103.

Seitlich der Kernapparatur, dem Reaktor 10, ist der Austragsschacht 103 angeordnet. In den Austragsschacht 103 ist eine feststehende Räumkurve, genannt Räumschwert 19, zugeordnet, die dafür sorgt, wenn das reversible Abdeckschild 104 gemäß Figur 3 von der Außenwand des Reaktors 10 entfernt wird, daß das Gut vom Anströmboden 16 in den Austragsschacht 103 ausgetragen wird. Im praktischen Betrieb geschieht dies in Abständen von etwa 30 Minuten. Der Vorgang ist elektronisch automatisiert. Bedingung für diesen Austragsvorgang ist das gleichzeitig einsetzende Rotieren des Anströmbodens 16.

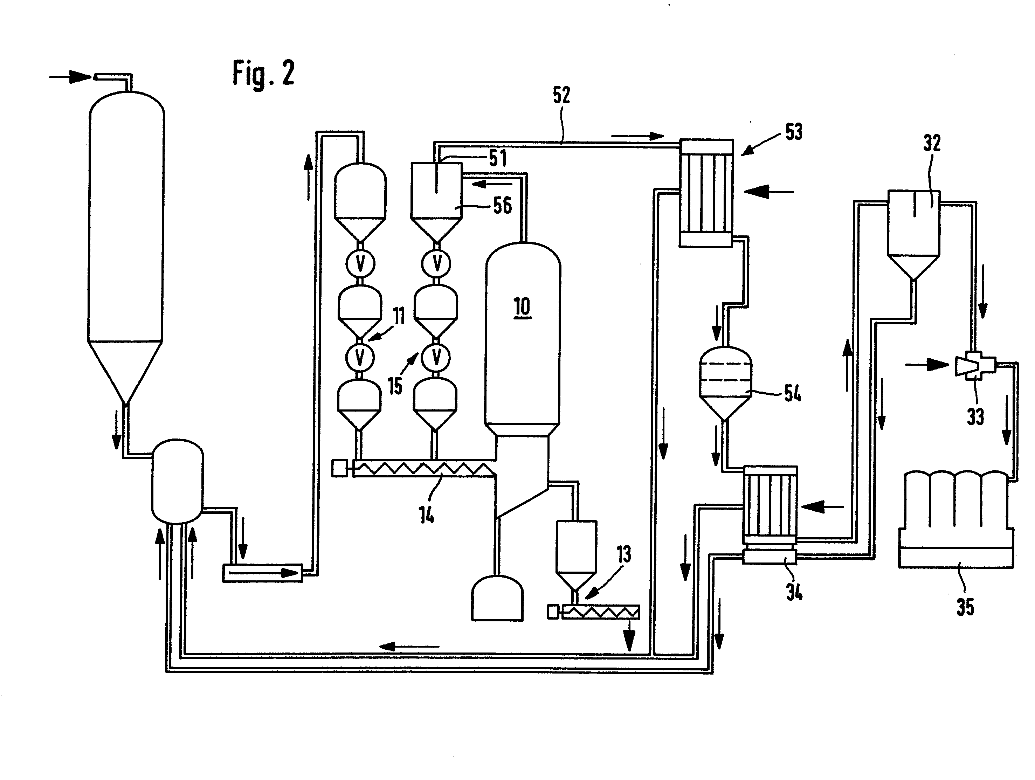

Die gasseitige Abfuhr des gewonnenen Rohgases erfolgt, wie die Figuren 1 und 2 zeigen, über einen Zyklon 50, dessen Oberlauf 51 das gewonnene Produktgas abführt und dessen Unterlauf mit dem Gas mitgerissene Feststoffteilchen, beispielsweise Kohlenstoff, über Schleusen 15 Feststoff der Eintragsschnecke 14 wieder zuführt. Das teilaufbereitete Rohgas passiert zunächst einen Kühler 53 und gelangt von dort in eine Filterapparatur 54, um in einem Tropfenabscheider 32 von letzten Resten von Flüssigkeit gereinigt zu werden über einen Kondensatbehälter 34 dem Aufgabegut wieder zugeführt. Das Gas selbst gelangt in die Mischapparatur 33 für Gas und Luft ist nunmehr motorverwendungsfähig.

Patentansprüche

1.  Verfahren zum Erzeugen eines hochwertigen, von kondensierbaren Bestandteilen weitestgehend befreiten Motorgases aus zerkleinerter und vorgetrockneter Biomasse, gegebenenfalls aus mineralischer Masse (Vergasungsstoff) mittels Aufbereiten (Aufheizen durch gasförmige Wärmeträger) in einem gegenüber der Atmosphäre abgedichteten System durch Aufcracken des aus einer Wirbelschicht gewonnenen Gases, dadurch gekennzeichnet, daß über einem Anströmboden (16) die aufzubereitende Masse rotiert und gleichzeitig schwach pulsiert, wobei die Bewegungsarten derart gesteuert werden, daß das Haufwerk weitestgehend frei von schornsteinartig wirkenden pneumatischen Durchblaskanälen ist, wobei ein etagenförmiges, die Haufwerkhöhe ganz oder überwiegend durchdringendes Rührwerk (12), gleichsinnig und nahezu gleichförmig durchsetzt und die Zufuhr des Aufbereitungsrohgutes sowie Abfuhr der Aufbereitungserzeugnisse von der Temperatur des Wirbelbettes mengenmäßig gesteuert ist.

2.  Verfahren nach Anspruch 1, dadurch gekennzeichnet, daß das gecrackte Gas in einem Temperaturbereich gefiltert wird, der die Kondensatfreiheit sichert.

3.  Verfahren nach Anspruch 1 und 2, dadurch gekennzeichnet, daß das gefilterte Gas mittels eines Wärmetauschers auf eine Temperaturstufe unterhalb des örtlich vorgegebenen Taupunktes gekühlt wird.

0103065

4. Verfahren nach den Ansprüchen 1 bis 3, dadurch gekennzeichnet, daß das bei der Abkühlung anfallende Kondensat dem Vergasungsmittel in Dampfform zugeführt wird.

5. Verfahren nach den Ansprüchen 1 bis 4, dadurch gekennzeichnet, daß die motorseitig zuzuführende Verbrennungsluft auf Gastemperatur vorgewärmt wird.

6. Einrichtung zur Durchführung des Verfahrens nach den Ansprüchen 1 bis 5, dadurch gekennzeichnet, daß in einem Verfahrensstammbaum mit einem Reaktor (10) als Kernapparatur, ein gegenüber der Außenatmosphäre abgeschlossener Eintrag (11) für vorgetrocknetes und zerkleinertes Aufbereitungsgut (zu vergasenden Stoff) mit teilweisem Rücklauf vorgeschaltet ist, der Reaktor (10) selbst ein Rührwerk (12) oberhalb des Anströmbodens (16) aufweist und dem Reaktor ein gegenüber der Außenatmospäre abgeschlossener Austrag (13) nachgeschaltet ist.

7. Einrichtung nach Anspruch 6, dadurch gekennzeichnet, daß der Anströmboden (16) nach oben abgedeckt radial mit ihrer großen Achse nach außen gerichtete schlitzförmige Düsenöffnungen (17) aufweist.

8. Einrichtung nach den Ansprüchen 6 und 7, dadurch gekennzeichnet, daß der Reaktor (10) im Bereich des Anströmbodens (16) einen Austragsschacht (18) aufweist.

9. Einrichtung nach den Ansprüchen 6 bis 8, dadurch gekennzeichnet, daß der Rotationsantrieb des Rührwerks (12) durch eine Welle (40) erfolgt und eine diese umgebende Hohlwelle (41) den Anströmboden (16) drehend bewegt.

0103065

10. Einrichtung nach den Ansprüchen 6 bis 9, dadurch gekennzeichnet, daß der Auslass des Produktgases in einen Zyklon (50) erfolgt, dessen Oberlauf das Gas und dessen Unterlauf (52) das gewonnene feste Zyklongut einer Eintragsschnecke (14) zuführt.

11. Einrichtung nach den Ansprüchen 6 bis 10, dadurch gekennzeichnet, daß das Reaktoroberteil (101) vergleichsweise einen größeren Durchmesser hat als das Unterteil (102).

12. Einrichtung nach den Ansprüchen 6 bis 11, dadurch gekennzeichnet, daß dem Produktgasauslaß Kühler (53) und Filter (54) nachgeordnet sind, wobei im kondensatfreien Temperaturbereich gefiltert wird.

13. Einrichtung nach den Ansprüchen 1 bis 12, dadurch gekennzeichnet, daß im Filter (54) auf Motorqualität gereinigtes Gas einem Tropfenabscheider (32) unterworfen und das Kondensat der auf Gastemperatur vorgewärmten Verbrennungsluft zugemischt wird.

0103065

1/3

Fig. 1

Fig. 2

2/3

0103065

0103065

Fig. 3

104

19    40    12

103

41

Fig. 4

19

103

Fig. 5a

A

17    16

B

Fig. 5b

17    16